# EUROPEAN PATENT APPLICATION

(11) **EP 0 804 041 A2**
(43) Date of publication of application: **29.10.1997**
(21) Application number: 97106668.3
(22) Date of filing: 22.04.1997
(51) Int. Cl.: H04N 11/00

(54) **Video signal processing apparatus for an improved definition television receiver**

(30) Priority: 26.04.1996 JP 130679/96
(71) Applicant: SONY CORPORATION, Tokyo (JP)
(72) Inventor: Tatehira, Yasushi, Shinagawa-ku, Tokyo (JP); Senda, Tetsuya, Shinagawa-ku, Tokyo (JP); Kita, Hiroyuki, Shinagawa-ku, Tokyo (JP)
(74) Representative: Müller, Frithjof E., Dipl.-Ing.

(57) **Abstract**

Extracting circuit for extracting the reinforcement signal from the received broadcasting signal; an input unit for inputting the video signal of the main picture portion and the extracted reinforcement signal; vertical filtering processing circuit (22) for smoothing a continuity in the vertical direction of the video signal; memory (25) for storing the video signal; and controller for controlling the memory in a rule such that in a camera mode, the reinforcement signal is stored into said storage means together with said video signal and a scanning line interpolating process using the reinforcement signal is executed and, in a film mode, the inputted video signal is delayed by a predetermined period of time.

## Description

### BACKGROUND OF THE INVENTION

### Field of the Invention

The invention relates to video signal processing apparatus which are suitable when they are used for allowing a television signal such that a scanning line interpolating process is performed by using a vertical resolution reinforcement signal to be displayed on a display such as computer monitor or flat display in which the number of effective scanning lines is limited.

### Description of the Related Art

In recent years, new media of a radio system and a wire system have progressively proposed by the remarkable development of electric communication techniques. For example, in a television broadcast, a high picture quality and a wide screen are realized in a frequency band, for example, 6 MHz of one channel while keeping compatibility with the existing broadcast. It is a large feature that as compared with the existing broadcasting system, the screen is a laterally long wide screen whose aspect ratio (ratio of lateral and vertical lengths of the screen) is equal to (16 : 9). For example, in Europe, for the PAL (Phase Alternation by Line) system as an existing broadcasting system, a broadcast by the PALplus system is being put into practical use as a next generation television broadcasting system through an experimental broadcast.

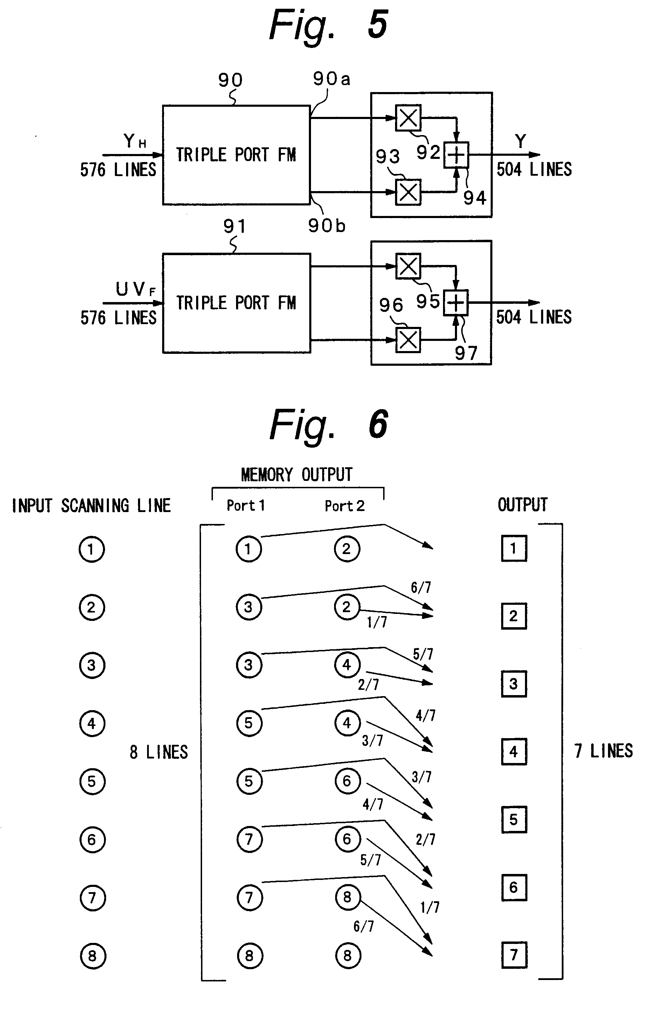

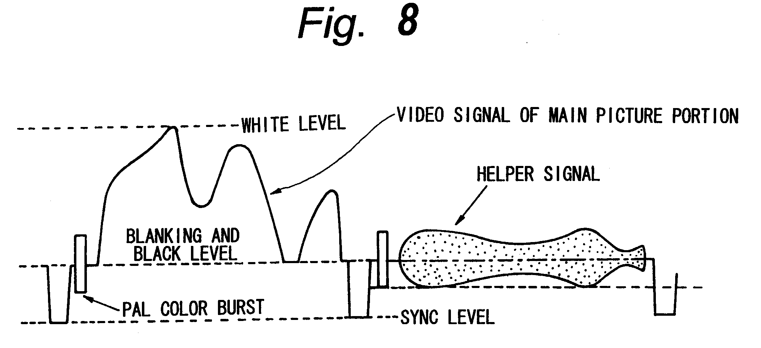

Figs. 7A and 7B show an example of an image received by the PALplus system. Fig. 7A shows a state in which a video image broadcasted by the PALplus system is displayed by an existing television receiver of a screen whose aspect ratio is equal to (4 : 3). In the existing television receiver in which a decoder of the PALplus is not equipped and whose aspect ratio is equal to 4 : 3, a picture plane in which non-picture portions are arranged in the upper and lower positions of a main picture portion is obtained as shown in Fig. 5A. This is because in the PALplus system, a signal has been transmitted in a letter box format. When such a video image is displayed by a television receiver having the decoder corresponding to the PALplus, the picture plane is displayed as shown in Fig. 7B, so that a wide picture plane can be enjoyed.

The signal format of the PALplus system is set to a signal of 625/50/2:1 (interlace). The main picture portion is obtained by a method whereby pixels of the 625-line (576 effective scanning lines) sequential scan are converted into a signal of 430 effective scanning lines by a 4-3 scanning line conversion and, after that, the signal is converted to an interlace scan by performing a predetermined vertical low-pass filtering process. In this instance, since the signal has been 4-3 converted, a vertical resolution deteriorates. Therefore, in order to reinforce the deteriorated vertical resolution, a vertical resolution reinforcement signal is transmitted. Although explanation will be made hereinlater, a signal in which the vertical resolution reinforcement signal has been demodulated and an amplitude has been limited on the reception side is called a helper signal.

In the PALplus system, there are two kinds of signal processing modes of "camera mode" which treats a television camera image or the like and "film mode" which treats a movie film image or the like in accordance with a kind of signal source. The camera mode is set to 50 fields per second and the film mode is set to 25 fields per second. Therefore, a signal process is performed on a field unit basis in the camera mode, while in the film mode, since an image is not moved between two fields constructing one frame, a signal process is executed on a frame unit basis.

The PALplus system needs to satisfy all of the following three conditions.

The first condition is to execute a vertical conversion to the letter box format. An original image in which the number of effective scanning lines is equal to 576 and an aspect ratio is set to 16 : 9 is converted into the letter box format in which the number of scanning lines is equal to 430 and an aspect ratio is equal to 16 : 9. In this instance, a QMF (Quadrature Mirror Filter) conversion is performed and a vertical resolution reinforcement signal of a luminance signal Y is obtained. The vertical resolution reinforcement signal of the luminance signal Y is multiplexed to upper and lower non-picture portions and is transmitted. The vertical conversion is executed on a field unit basis in the above camera mode and is carried out on a frame unit basis in the film mode.

The second condition is to execute a modulation of the helper signal. A color subcarrier is modulated by the vertical resolution reinforcement signal derived by the above QMF conversion. Upon modulation, a level limitation and a horizontal band limitation are performed to the vertical resolution reinforcement signal. The level limitation is also performed upon transmission. Fig. 8 shows an example of the vertical resolution reinforcement signal and a signal of a main picture portion. In the camera mode, scanning line interpolating process using the helper signal is indispensable. On the other hand, in the film mode, scanning line interpolating process is dispensable.

The third condition relates to a motion adaptive color plus process. It is called an MACP (Motion Adaptive Color Plus) and is an encoding process which is executed for suppression of a crosstalk interference between the luminance signal Y and a chrominance signal C and improvement of a horizontal resolution of the luminance signal. In the camera mode, a region (motion region) in a picture plane where the chrominance signal is moving and a still region are discriminated. In the PALplus signal, although the luminance signal Y has a band width of 5 MHz, in the motion region, the band width is band limited to 3 MHz and, in the still region, the whole band of 5 MHz is sent. On the reception side, the process is switched on the basis of a discrimination result of the motion region and the still region. In the film mode in which the process is executed on a 1-frame unit basis, since a video image is not moved between fields constructing one frame, the process for the still region in the camera mode is fixedly performed. However, motion adaptive color plus process is dispensable.

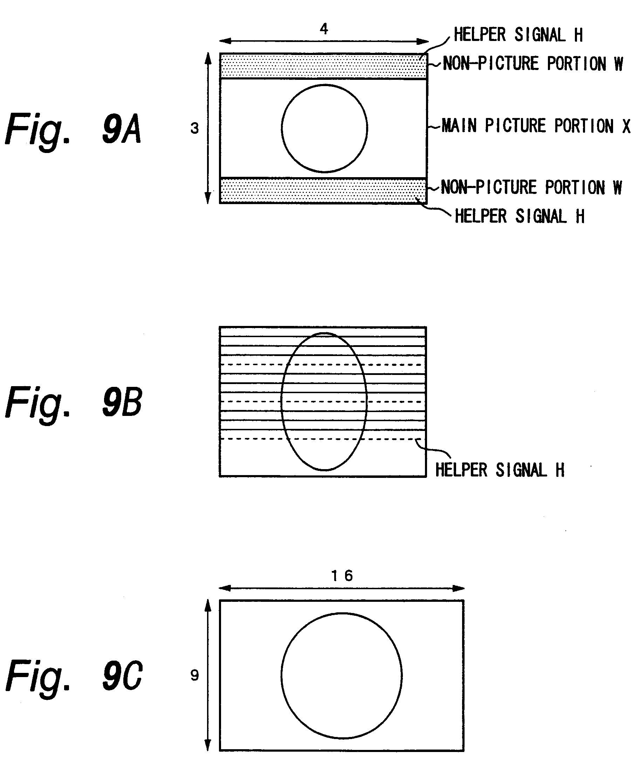

Figs. 9A, 9B and 9C schematically show a scanning line interpolation by the PALplus system. As shown in Fig. 9A, a broadcasting signal by the PALplus system (hereinafter, abbreviated as a PALplus signal) is constructed by a main picture portion X and non-picture portions W arranged at upper and lower positions of the main picture portion X. A helper signal H is multiplexed to the non-picture portions W. In the television receiver corresponding to the PALplus system, in order to demodulate the PALplus signal of such a construction, an interleaving process using a memory is carried out.

As shown in Fig. 9B, namely, for the screen whose aspect ratio is equal to 4 : 3, scanning lines of the main picture portion X of three lines such as first to third lines are outputted and a scanning line of one line to which the helper signal H was multiplexed is inserted. Subsequently, an interleaving process such that three scanning lines of the main picture portion X and the scanning line to which the helper signal H was multiplexed are alternately inserted is likewise executed. Therefore, at this stage, as shown in the diagram, an image in which the inherent image is extended in the vertical direction is obtained.

The image which was interleave processed is filtering processed and also extended in the side direction in order that the aspect ratio is equal to 16 : 9 by a vertical filter. By the process, as shown in Fig. 9C, a wide image of an aspect ratio of 16 : 9 is reconstructed. Namely, in the television receiver corresponding to the wide screen of the aspect ratio of 16 : 9, a wide image of the aspect ratio of 16 : 9 can be reproduced by the above process. In the television receiver of the conventional screen whose aspect ratio is set to 4 : 3, the conventional image of the aspect ratio of 4 : 3 as shown in Fig. 9A is reproduced as it is.

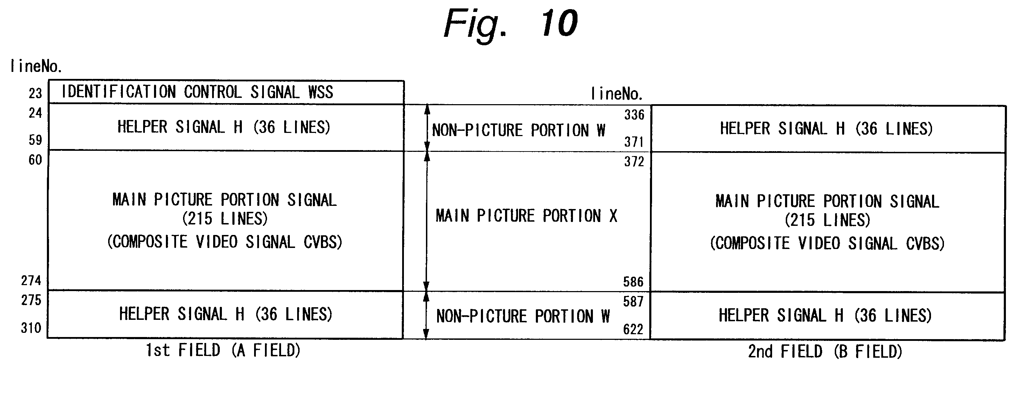

Fig. 10 shows the details of a frame construction according to the PALplus system. The first field is constructed by the main picture portion X consisting of 215 lines and non-picture portions H which exist at the upper and lower positions of the main picture portion X and each of which consists of 36 lines. A WSS (Wide Screen Signaling) serving as a PALplus signal, foregoing mode signal, and an ID control signal to detect the presence or absence of a 3-dimensional precombing or the like is interposed in the 23rd line in the non-picture portion. In the main picture portion X of the PALplus signal, a composite video signal comprising scanning lines of 215 lines per field is transmitted at the aspect ratio of 16 : 9. In the non-picture portions H which are arranged at the upper and lower positions of the main picture portion X and each of which consists of 36 scanning lines, the helper signals are transmitted. The second field is also constructed in a manner similar to the first field.

In the television receiver corresponding to the PALplus system, an interpolating process is performed upon reproduction of the PALplus signal, so that an image of a higher quality is derived. Namely, an image of 16 : 9 consisting of the scanning lines of 287 lines per field is derived from the signals of total 287 lines of the luminance signal (215 lines/field) of the main picture portion X and the helper signals H (72 lines/field for the upper and lower helper signals). With respect to a color difference signal, an image of 16 : 9 consisting of the scanning lines of 287 lines per field is obtained from only the color difference signal (215 lines/field) of the main picture portion.

Such an interpolating process is executed on a frame unit basis in principle. In this instance, in case of the motion image by the foregoing camera mode in which images in the first field (hereinafter, referred to as an "A field") and the second field (hereinafter, referred to as a "B field") largely differ in one frame, if the process is carried out on a frame unit basis, a picture quality largely deteriorates. Therefore, in the PAL plus system, the mode signal of one bit indicative of a correlation between those two fields is multiplexed to the WSS and the camera mode and the above film mode are distinguished, thereby allowing the interpolating process to be certainly performed. Namely, in the film mode, since the images of the A field and B field are the same, an intraframe interpolation is executed by using the images of the A and B fields in the same frame. In the camera mode, an intrafield interpolation is carried out by using the video signal of one field.

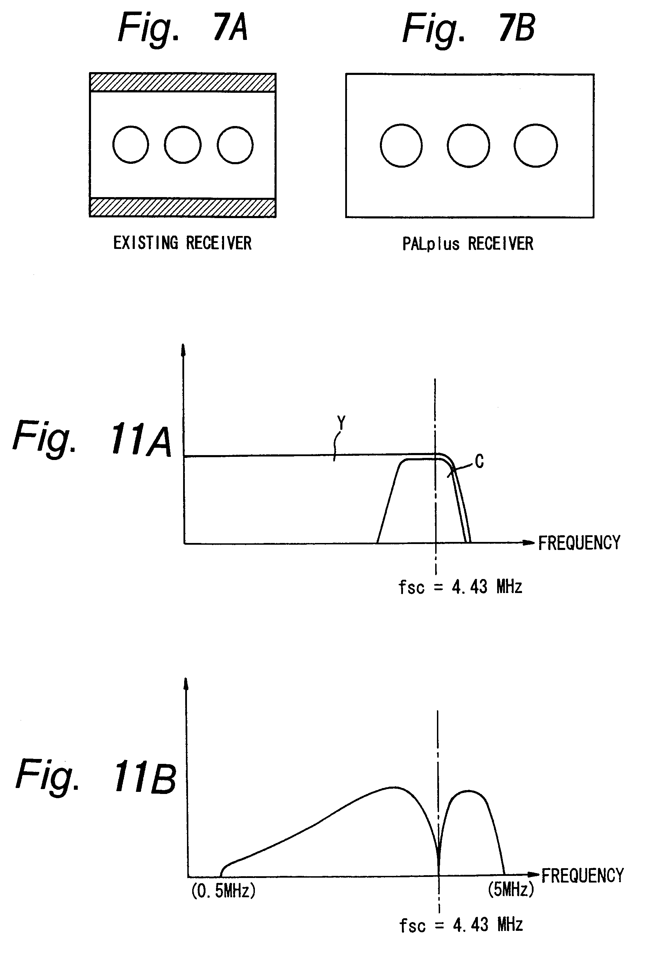

Fig. 11A shows signal spectra of the luminance signal Y and carrier chrominance signal C according to the PALplus system. The C signal modulated by a color subcarrier frequency of 4.43 MHz is frequency multiplexed to the Y signal. Fig. 11B shows a signal spectrum of the helper signal and this signal has also been modulated by the color subcarrier frequency of 4.43 MHz and has a band of about 0.5 to 5 MHz.

On the other hand, in recent years, a flat display technique has been developed and a television receiver using it is being developed. As a flat panel display used in such a television receiver, for example, there are a liquid crystal panel (LCD) and a plasma display. In such a flat panel display, the number of scanning lines which can be displayed is fixed in terms of a structure of the panel. For example, in the display of the computer screen, a VGA (Video Graphic Array) in which the number of effective scanning lines is equal to 480 is actually a standard. The number of effective scanning lines of the television signal by the NTSC system is also equal to 480. In the flat panel display, therefore, a system in which the number of effective scanning lines is equal to 480 is becoming a standard system.

Therefore, in order to display a video image by the PALplus system mentioned above to such a flat panel display, the number of effective scanning lines of the video signal which is supplied to the display needs to be converted, for example, from 576 to 480.

As a converting method, for instance, there are a method whereby a demodulation PALplus signal in which the number of effective scanning lines is equal to 576 is further format converted to the signal in which the number of effective scanning lines is equal to 480 line and a method of displaying the main picture portion of the letter box format without performing the scanning line interpolating process by the PALplus signal (in this case, the number of effective scanning lines is equal to 432).

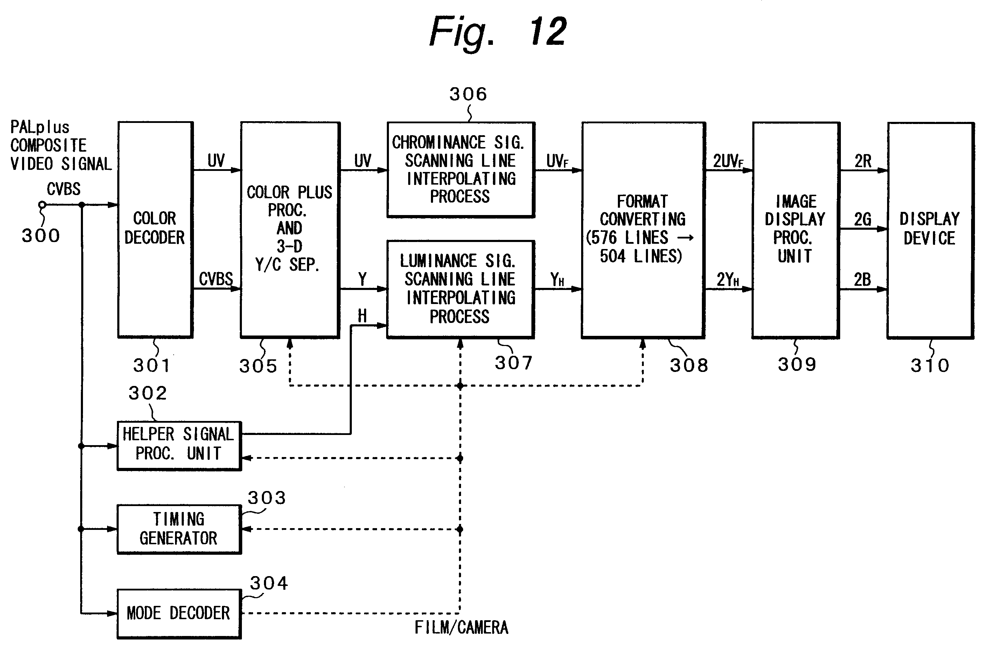

Fig. 12 shows an example of a construction of a video image apparatus for demodulating the PALplus signal and allowing an image to be displayed on a display device based on the foregoing VGA standard. A composite video signal CVBS according to the PALplus system is supplied from an input terminal 300. The signal CVBS is supplied to a color decoder 301, a helper signal processing unit 302, a timing generator 303, and a mode decoder 304.

The signal CVBS supplied to the color decoder 301 is subjected to a process to extract a band including a color carrier by, for example, a band pass filter and a color demodulation is performed, thereby deriving a color difference signal UV. The color difference signal UV includes line sequenced C_{R} and C_{B} components. It is difficult to perfectly separate the band of the luminance signal Y and the band including the color carrier by the band pass filter. Therefore, the component of the luminance signal Y is mixed as a cross color component in the color difference signal UV which was color demodulated. The color difference signal UV including the cross color component and the signal CVBS are respectively supplied to a color plus process and 3-dimensional Y/C separating unit 305 from the color decoder 301, respectively.

In the mode decoder 304, the foregoing WSS multiplexed to the 23rd line of the supplied signal CVBS is extracted and decoded. In this construction, the information based on the WSS is sent to each of the necessary sections. For example, the ID information that is included in the WSS and is used to identify the camera mode and film mode is supplied to the helper signal processing unit 302, timing generator 303, color plus process and 3-dimensional Y/C separating unit 305, a luminance signal scanning line interpolation processing unit 307, and a format converting unit 308.

The timing generator 303 generates various timing signals based on, for example, a horizontal sync signal included in the supplied signal CVBS. Although not shown, the timing signal is supplied to each section in the above construction.

In the helper signal processing unit 302, a demodulation and an amplitude adjustment of the vertical resolution reinforcement signal which is modulated by the color carrier signal and transmitted in the upper and lower non-picture portions of the supplied signal CVBS are executed, so that the foregoing helper signal H is derived. The helper signal H is supplied to the luminance signal scanning line interpolation processing unit 307 for the scanning line interpolating process.

In the color plus processing and 3-dimensional Y/C separating unit 305, a filtering process by a 3-dimensional filter using a field memory corresponding to 3-dimensional precombing characteristics on the transmission side is executed to the supplied signal CVBS, so that the luminance signal Y is extracted. The extracted luminance signal Y is supplied to the luminance signal scanning line interpolation processing unit 307. A similar filtering process is also executed to the supplied color difference signal UV and the mixed cross color component is removed. The color difference signal UV from which the cross color component was removed is supplied to a chrominance signal scanning line interpolation processing unit 306.

In the luminance signal scanning line interpolation processing unit 307, a scanning line interpolating process by the helper signal H is performed on the basis of the ID signal supplied from the mode decoder 304 and the timing signal supplied from the timing generator 303. In the scanning line interpolating process, the main picture portion in which the number of scanning lines is set to 215 lines per field is combined to the luminance information which the upper and lower helper signals H of total 72 lines which were transmitted and supplied in the non-picture portions and is converted into the luminance signals Y_{H} of 287 lines.

In the chrominance signal scanning line interpolation processing unit 306, an intrafield scanning line interpolating process is executed. By this process, the scanning lines of the main picture portion in which the number of scanning lines is equal to 215 lines per field is converted to 287 lines of the number that is 4/3 times as large as 215, so that a color difference signal UV_{F} is obtained.

The luminance signal Y_{H} and color difference signal UV_{F} which were respectively interpolation processed by the luminance signal scanning line interpolation processing unit 307 and chrominance signal scanning line interpolation processing unit 306 are supplied to the format converting unit 308, respectively. In the format converting unit 308, a format conversion is performed by a predetermined method to the supplied luminance signal Y_{H} and color difference signal UV_{F} and the number of scanning lines is converted. The scanning lines of the luminance signal Y_{H} and color difference signal UV_{F} which have the scanning lines of 287 lines per field and in which the aspect ratio is set to 16 : 9 are converted into, for instance, 252 lines per field (namely, 504 lines per frame). By such a conversion, the video image is converted to an image suitable for displaying on the flat panel display of the VGA standard in which the number of scanning lines is equal to 480 lines.

The luminance signal Y_{H} and color difference signal UV_{F} in which the number of scanning lines was converted are supplied to an image display processing unit 309 and are converted into a signal format suitable for allowing an image to be displayed by a display device 310. In this example, signals of three primary colors comprising RGB are formed from the luminance signal Y_{H} and color difference signal UV_{F}. Those signals are supplied to the display device 310 comprising, for example, a liquid crystal display (LCD) and its driving unit and a corresponding image is displayed.

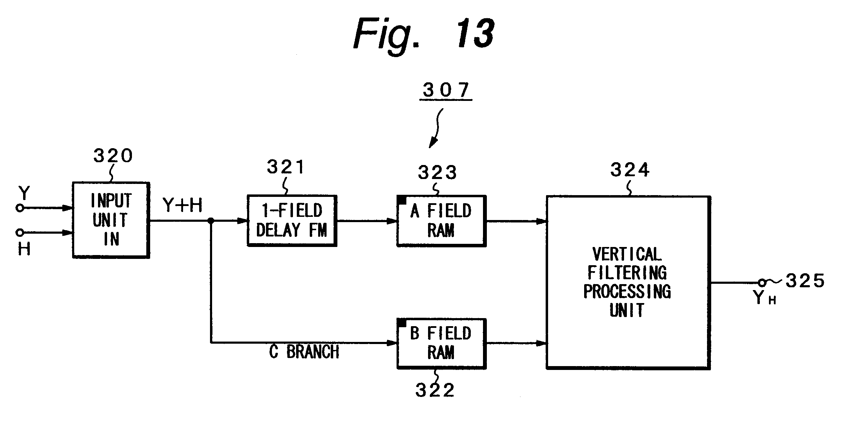

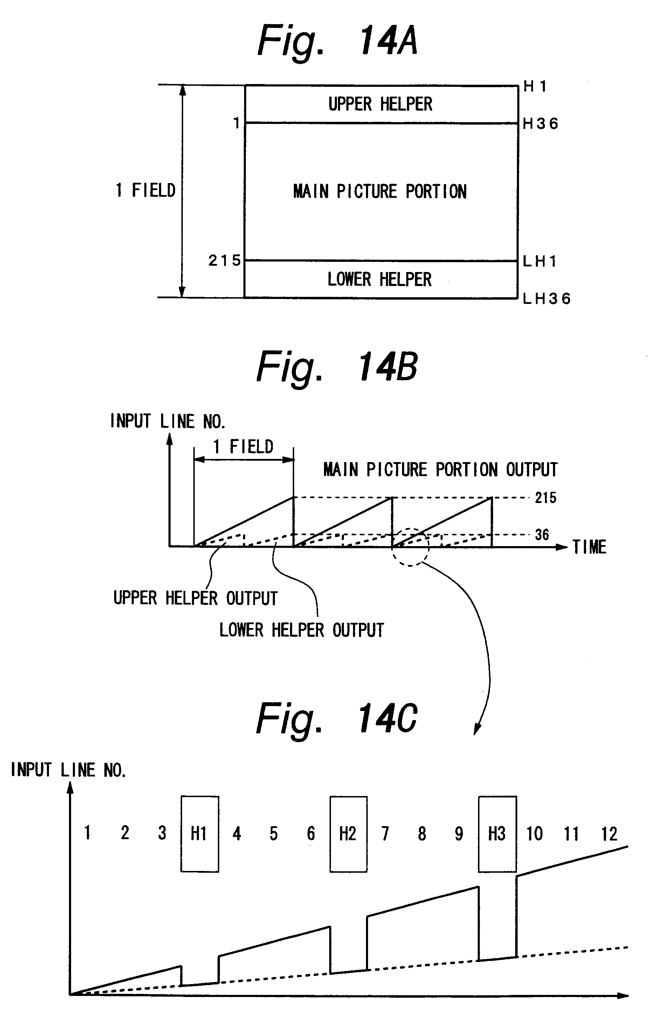

Fig. 13 schematically shows an example of a construction of the foregoing luminance signal scanning line interpolation processing unit 307. Figs. 14A to 14C schematically show the interpolating process (interleaving process) in the interpolation processing unit 307. The luminance signal Y and helper signal H are supplied to an input unit 320, respectively. In the input unit 320, the helper signal H are multiplexed to the upper and lower non-picture portions of the luminance signal Y and are converted into a digital signal of, for example, 8 bits by an A/D conversion, thereby obtaining a digital luminance signal Y + H.

As mentioned above, the ID signal based on the WSS is supplied from the mode decoder 304 to the luminance signal scanning line interpolation processing unit 307. The process in the camera mode and film mode in the luminance signal scanning line interpolation processing unit 307 is switched by the ID information of the film mode and camera mode included in the supplied ID signal.

In the film mode, the luminance signal Y + H from the input unit 320 is supplied to a 1-field delay field memory (hereinafter, abbreviated to a 1-field delay FM) 321 and is written into a B field RAM 322. The digital luminance signal Y + H supplied to the 1-field delay FM 321 comprising, for example, an FIFO memory is delayed by a time of one field and is written into an A field RAM 323.

For instance, a dual port RAM in which the reading operation can be performed in parallel with the writing operation is used as an A field RAM 323 and a B field RAM 322.

In the A field RAM 323 and B field RAM 322, when data is read out, the interleaving process as mentioned above is executed. Fig. 14A shows a definition of input line numbers which are used in the following description. As mentioned above, in the following description, the helper signals of the upper non-picture portion are set to H1, H2, ..., and H36 from the top, while the helper signals of the lower non-picture portion are set to LH1, LH2, ..., and LH36 from the top. With respect to the main picture portion, the first to 215th lines are simply set.

In the digital luminance signal Y + H written in the RAMs 322 and 323, as for the luminance signal Y arranged in the main picture portion, the data is sequentially read out from the first line of the main picture portion toward the 215th line. In parallel with it, as shown by broken lines in Fig. 14B, the helper signal H multiplexed to the upper non-picture portion is sequentially read out from H1 to H36. Subsequently, the helper signal H multiplexed to the lower non-picture portion is sequentially read out from LH1 to LH36. Fig. 14C enlargedly shows a portion surrounded by a circle in Fig. 13B mentioned above. As shown in the diagram, the first, second, and third lines of the luminance signal Y are read out and H1 of the helper signal H is read out. Subsequently, the fourth, fifth, and sixth lines of the signal Y are read out and H2 of the helper signal H is read out. In this manner, the helper signal H of one line is multiplexed to the luminance signals Y of three lines and is interleave processed. This process is common to the A field RAM 323 and B field RAM 322.

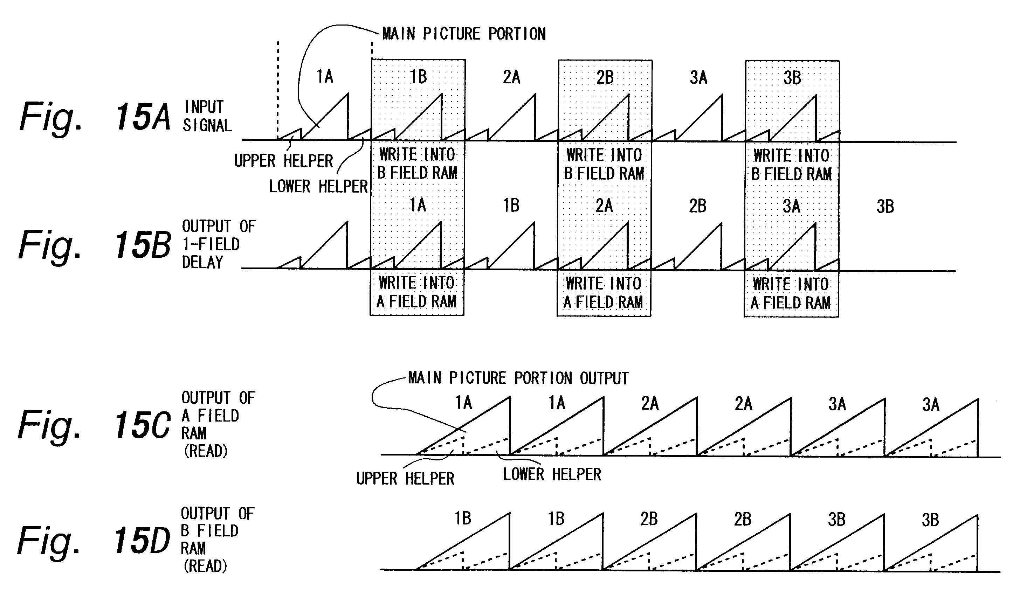

Figs. 15A to 15D show a memory control in the film mode in the A field RAM 323 and B field RAM 322. On the basis of Figs. 15A to 15D, a writing and reading method of the luminance signal Y + H will now be described. Fig. 15A shows the luminance signal Y + H which is supplied from the input unit 320 to the B field RAM 322 and the A field RAM 323. As shown in the diagram, the signal of the A field (first field) of the first frame first arrives at the B field RAM 322 and the signal of the B field (second field) of the same frame subsequently arrives. Next, the A field and B field of the second frame, the third frame, ..., arrive at the B field RAM 322. In this instance, the data of each field arrives in accordance with the order of the upper helper signals H1 to H36, the first to 215th lines of the luminance signal Y of the main picture portion, and the lower helper signals LH1 to LH36.

Fig. 15B shows the luminance signal Y + H which is outputted from the 1-field delay FM 321 and is written into the A field RAM 323. The timing of the luminance signal Y + H is delayed by a time of one field by the 1-field delay FM 321. Therefore, the A field of the first frame arrives at the A field RAM 323 at the timing when the B field of the first frame arrives at the B field RAM 322. After that, the luminance signal Y + H arrives at the A field RAM 323 at timings which are deviated by a time of one field for the arrival at the B field RAM 323 in a manner such as B field of the first frame, A field of the second frame, .... In this instance, the data of each field arrives in accordance with the order of the upper helper signal H, luminance signal Y of the main picture portion, and the lower helper signal H.

Only when the signals of the A field and B field of the same frame simultaneously arrive at the A field RAM 323 and B field RAM 322, the helper signal H and luminance signal Y are written into the A field RAM 323 and B field RAM 322, respectively. An example of the writing timings is shown by hatched regions in the diagram. The signal of the A field is written into the A field RAM 323 at which the signal which was delayed by one field arrives, while the signal of the B field is written into the B field RAM 322.

When the signals of the A and B fields are read out from the A field RAM 323 and B field RAM 322, the foregoing interleaving process is executed. In this instance, the same contents are continuously read out with respect to two fields. Such a state is shown in Figs. 15C and 15D. Namely, as shown in Fig. 15C, the luminance signal Y of the main picture portion is sequentially read out from the A field RAM 323 in accordance with the order from the first to 215th lines and the helper signals H of the upper and lower non-picture portions of one line are read out for the luminance signal Y of three lines. In addition, as shown in Fig. 15D, the B field RAM 322 is read out as well as the A field RAM 323.

In case of the film mode, in order to obtain the A field output and B field output, the contents of the scanning lines of both of the input A field and the input B field are necessary. Therefore, the same contents are read out from the A field RAM 323 and B field RAM 322 with respect to two fields. The signals read out from the A field RAM 323 and B field RAM 322 are respectively supplied to a vertical filtering processing unit 324, respectively.

In the vertical filtering processing unit 324, by performing a vertical filtering process to the signals of two fields supplied, thereby obtaining the necessary luminance signal Y_{H}. The luminance signal Y_{H} derived is outputted to an output terminal 325.

In the camera mode, the luminance signal Y + H from the input unit 320 is supplied and written to only the B field RAM 322 in accordance with a C branch in Fig. 13. The supplied luminance signal Y + H is interleave processed in the B field RAM 322 and is read out. The read signal is supplied to the vertical filtering processing unit 324 and is outputted as a necessary luminance signal Y_{H} to the output terminal 325.

As mentioned above, in the luminance signal scanning line interpolation processing unit 307, in order to perform both of the processes in the film mode and camera mode, three field memories such as 1-field delay FM 321, A field RAM 323, and B field RAM 322 are necessary.

Although the processes for the luminance signal have been described here, even in the chrominance signal scanning line interpolation processing unit 306, an almost similar memory management is performed to the supplied color difference signal UV and the scanning line interpolating process is executed. However, the process using the helper signal is not executed.

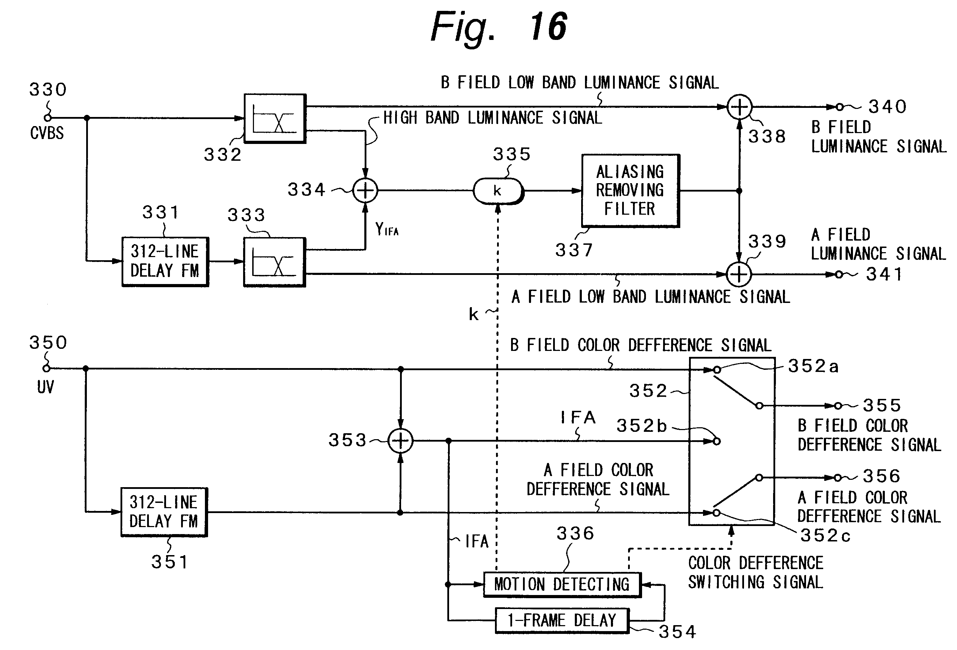

Fig. 16 schematically shows an example of a construction of the foregoing color plus process and 3-dimensional Y/C separating unit 305. The composite video signal CVBS is supplied to an input terminal 330. The signal CVBS is supplied from the input terminal 330 to both of a 312-line delay 331 and a B field band dividing filter 332. The 312-line delay 331 comprises a field memory and delays the supplied signal CVBS by a time of 312 lines and outputs. As is well known, in the PAL/PALplus system, one frame is constructed by 625 lines while including a vertical blanking period. Therefore, the signal CVBS is delayed by a time of only one field in the 312-line delay 331. An output of the 312-line delay 331 is supplied to an A field band dividing filter 333.

The B field band dividing filter 332 has, for example, a low-pass filter and a high-pass filter. In the band dividing filter 332, the signal CVBS is divided into a low frequency region (low band luminance signal) including no color carrier signal and a high frequency region (high band luminance signal) including the color carrier signal. A boundary of the bands between the low frequency region and high frequency region is set to, for example, 3 MHz in case of the composite video signal of the PAL/PALplus system.

On the other hand, the signal CVBS which was delayed by a time of 312 lines by the 312-line delay 331 is supplied to the A field band dividing filter 333 having characteristics similar to those of the above B field band dividing filter 332 and is divided into a low band luminance signal and a high band luminance signal.

The A field low band luminance signal which was band divided by the A field band dividing filter 333 is supplied to one input terminal of an adder 339. Similarly, the B field low band luminance signal which was band divided by the B field band dividing filter 332 is supplied to one input terminal of an adder 338.

The B field high band luminance signal and the A field high band luminance signal which were respectively band divided by the band dividing filters 332 and 333 are supplied to one input terminal and the other input terminal of an adder 334, respectively, and are added. The n-th line which was delayed by a time of 312 lines in the A field and the (n + 312)th line in the B field become the adjacent lines when one frame is constructed by the A and B fields. In the film mode, since the A and B fields are set to the same image, a correlation of the luminance signals between those lines is high. In the PAL/PALplus system, on the other hand, phases of color carrier signals in the lines which are away from each other by 312 lines are different by 180°. Therefore, the color carrier signals included on the high band side of the signal CVBS are set off at the time of supply to the input terminal 330 by the addition in the adder 334. Thus, the Y/C separation is performed.

An intraframe average high band luminance signal Y_{IFA} outputted from the adder 334 is supplied to a coefficient device 335. The coefficient device 335 multiplies a predetermined coefficient k to the supplied signal, thereby limiting a level and an amplitude of the signal. When the composite video signal CVBS supplied to the input terminal 330 is based on an image which severely moves, a harmful component leaks to the intraframe average high band luminance component derived by the addition. To reduce a visibility of an image fault by the harmful component, in the coefficient device 335, the coefficient k according to a motion amount that is sent from a motion detecting unit 336, which will be explained hereinlater, is multiplied to the signal Y_{IFA} supplied, thereby attenuating the amplitude of the signal Y_{IFA}.

The signal Y_{IFA} which was adjusted to the amplitude according to the motion amount of the luminance signal by the coefficient device 335 is supplied to an aliasing removing filter 337. In the color plus process and 3-dimensional Y/C separating unit 305, the same high band luminance signal is used over two fields in the supplied signal CVBS, so that a continuity of an oblique line is not smooth. Such a situation is lightened in the aliasing removing filter 337.

The signal Y_{IFA} outputted from the aliasing removing filter 337 is supplied to the other input terminal of the adder 338 and the other input terminal of the adder 339. The adder 338 adds the signal Y_{IFA} and the B field low band luminance signal, thereby obtaining a B field luminance signal. The B field luminance signal is outputted to an output terminal 340. Similarly, the adder 339 adds the signal Y_{IFA} and the A field low band luminance signal, thereby obtaining an A field luminance signal. The A field luminance signal is outputted to an output terminal 341.

A process for the color difference signal UV in the color plus process and 3-dimensional Y/C separating unit 305 will now be described. The color difference signal UV is supplied to an input terminal 350. The supplied color difference signal UV is supplied to a 312-line delay 351, one input terminal of an adder 353, and an input terminal 352a of a color difference output switch 352. The color difference output switch 352 has three inputs and two outputs, selects two outputs among three inputs from the motion detecting unit 336, which will be explained hereinlater, on the basis of a color difference switching signal that is sent in accordance with a motion amount, and supplies to output terminals 355 and 356, respectively.

In a manner similar to the case of the above composite video signal CVBS, the signal which was supplied to the 312-line delay and was delayed by a time of 312 lines is set to the A field color different signal. The signal that is directly supplied to the color difference output switch 352 and adder 353 is set to the B field color difference signal. The A field color difference signal outputted from the 312-line delay is supplied to an input terminal 352c of the color difference output switch 352 and is also supplied to the other input terminal of the adder 353.

The adder 353 adds the A field color difference signal and the B field color difference signal, thereby obtaining an intraframe average color difference signal C_{IFA}. In this manner, by adding the color difference signals of the A and B fields in the film mode, in a manner similar to the case of the foregoing intraframe average high band luminance signal Y_{IFA}, the luminance component mixed to the color carrier signal can be removed. The signal C_{IFA} outputted from the adder 353 is supplied to an input terminal 352b of the color difference output switch 352.

In the color difference output switch 352, in an ordinary video image which doesn't vigorously move, the input terminals 352a and 352c are selected on the basis of the color difference switching signal which is supplied from the motion detecting unit 336. Therefore, the B field color difference signal is supplied to the output terminal 355 and the A field color difference signal is supplied to the output terminal 356, respectively.

On the other hand, in the case where the color difference signal UV which is supplied relates to a video image which vigorously moves, a harmful component is generated in a manner similar to the case of the signal Y_{IFA}. In this case, therefore, on the basis of the color difference switching signal from the motion detecting unit 336, the input terminal 352b is selected in the color difference output switch 352 for both of the two outputs. Therefore, the signal C_{IFA} is outputted to both of the output terminals 355 and 356 and are set to the B field color difference signal and the A field color difference signal, respectively.

A measurement of the motion amount in the motion detecting unit 336 mentioned above will now be described. The intraframe average color difference signal C_{IFA} outputted from the adder 353 is supplied to the input terminal 352b of the color difference output switch 352 and is also supplied to one input terminal of the motion detecting unit 336 and to a 1-frame delay 354. The signal C_{IFA} which was delayed by a time of one frame by the 1-frame delay 354 is supplied to the other input terminal of the motion detecting unit 336.

In the motion detecting unit 336, the attenuation coefficient k for the signal Y_{IFA} and the color difference switching signal for the color difference output switch 352 are formed by using the signal C_{IFA} supplied to one input terminal and the signal C_{IFA} which was supplied to the other input terminal and was delayed by a time of one frame on the basis of an algorithm specified to the specifications of the PALplus system.

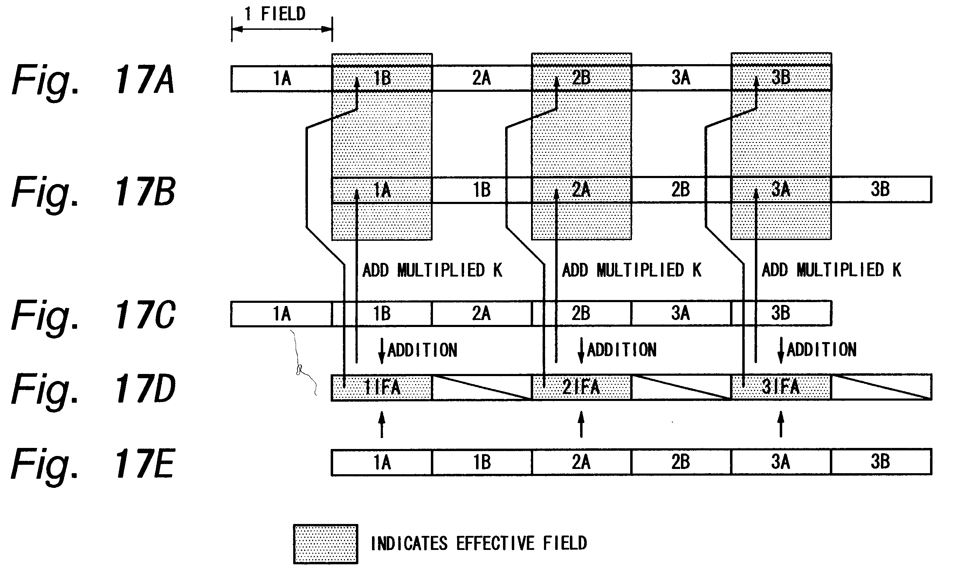

Figs. 17A to 17E show time charts for the color plus signal process in the color plus process and 3-dimensional Y/C separating unit 305. For example, the processes of the luminance signal will now be described. Fig. 17A shows the A field low band luminance signal. Fig. 17B shows the B field low band luminance signal. Fig. 17C shows the B field high band luminance signal. Fig. 17E shows the A field high band luminance signal. Fig. 17D shows the intraframe average high band luminance signal Y_{IFA} outputted from the adder 334. In the example, it is assumed that the luminance signal sequentially arrives in accordance with the order of the A field (1A) and B field (1B) of the first frame, the A field (2A) and B field (2B) of the second frame, the A field (3A) and B field (3B) of the third frame, ....

As mentioned above, the A field high band luminance signal is a signal which is delayed by a time of one field by the 312-line delay 331. In the film mode, the processes using both A and B fields are performed . Therefore, as shown in Fig. 17D, intraframe average high band luminance signal Y_{IFA} is obtained by adding the B field high band luminance signal and the A field high band luminance signal in the same frame which simultaneously arrive at the adder 334. That is, as shown in hatched regions in Fig. 17D, the signal Y_{IFA} is derived every other field.

As shown in Figs. 17A and 17B, at timings when the valid signal Y_{IFA} is derived, the B field low band luminance signal and the A field low band luminance signal in the same frame as that of the signal Y_{IFA} arrive at the adders 338 and 339. In the adders 338 and 339, therefore, the signal Y_{IFA} is added to the B field low band luminance signal and A field low band luminance signal, respectively, so that the B field luminance signal and A field luminance signal of the same frame are derived. Namely, as shown in the hatched regions in Figs. 17A and 17B, the B field luminance signal and A field luminance signal of the same frame are obtained every other field.

The processes for the color difference signal UV in the color plus process and 3-dimensional Y/C separating unit 305 are also executed in a manner similar to the processes for the luminance signals.

As shown in Figs. 17A to 17E, the outputs by the color plus signal process are simultaneously derived from two output lines every other field. Figs. 17A to 17E are compared with the diagram of the memory control in the luminance signal scanning line interpolation processing unit 307 shown in Figs. 15A to 15D mentioned above. It will be, consequently, understood that the processes in the adders 338 and 339 in the color-plus process and 3-dimensional Y/C separating unit 305 shown in Figs. 17A and 17B and the processes for the input signal by the 1-field delay FM 321 in the luminance signal scanning line interpolation processing unit 307 shown in Fig. 15A are common. Therefore, the 1-field delay FM 321 can be replaced to the color plus process and 3-dimensional Y/C separating unit 305.

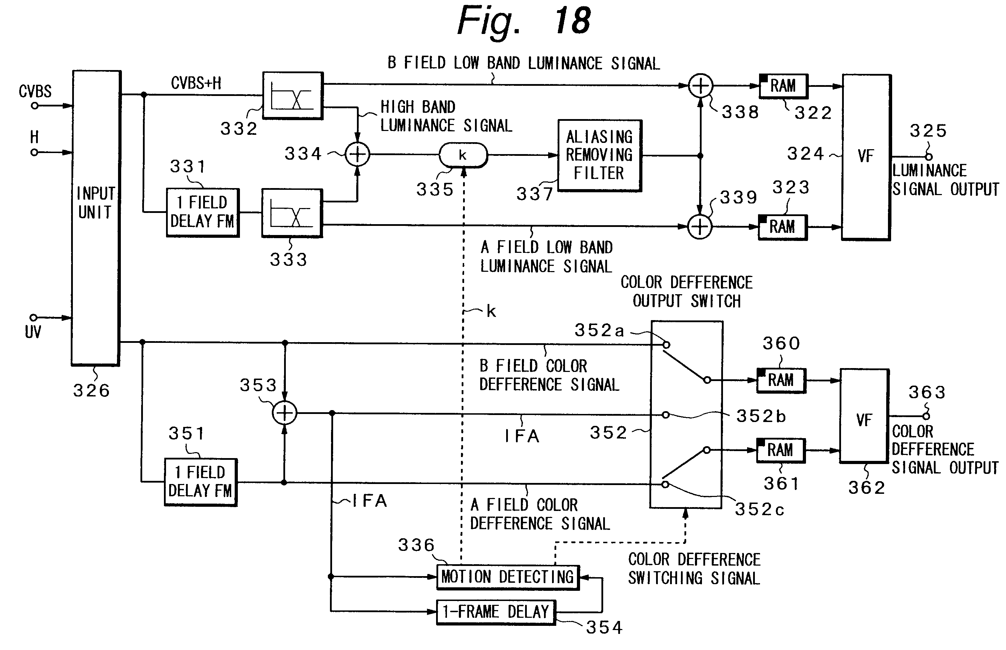

Fig. 18 shows an example of a construction in which the 1-field delay FM 321 is replaced to the color plus process and 3-dimensional Y/C separating unit 307. Actually, in many cases, such a construction is often used as an example. With respect to the luminance signal, the B field luminance signal and A field luminance signal outputted from the adders 338 and 339 are supplied to the B field RAM 322 and A field RAM 323, respectively.

On the other hand, as for the color difference signal, the color difference signal outputs on the B field side and A field side of the color difference output switch 352 are supplied to a B field RAM 360 and an A field RAM 361, respectively. The RAMs 360 and 361 are used to perform an intrafield scanning line interpolating process to the color difference signal. The B field color difference signal and A field color difference signal which were read out from the RAMs 360 and 361 are supplied to a vertical filtering processing unit 362 and are subjected to a vertical filtering process. The resultant signal is outputted as a color difference signal output to an output terminal 363.

In the video signal processing apparatus according to the prior art, in order to cope with both of the camera mode and the film mode, a number of field memories are necessary. Thus, there is a problem on costs of the apparatus.

In addition, since the converting process of the number of scanning lines is performed, the number of stages of the signal process increases, so that the number of factors which cause the deterioration of the picture quality increases. To avoid it, as mentioned above, there is a method whereby a small change in aspect ratio is sacrificed and the scanning lines of 430 lines in the main picture portion in the letter box are displayed without converting the number of scanning lines. According to such a method, however, since there are characteristics such that the vertical frequency characteristics in the film mode in the PALplus signal include an aliasing component in the main picture portion, there is a problem such that a line flicker is conspicuous.

### OBJECTS AND SUMMARY OF THE INVENTION

It is, therefore, an object of the invention to provide video signal processing apparatus of the PALplus system in which a hardware scale is suppressed without using a redundant field memory or the like.

Another object of the invention is to provide video signal processing apparatus of the PALplus system in which no line flicker is caused in a film mode.

To solve the above subjects, according to the invention, there is provided a video signal processing apparatus for receiving a broadcasting signal in which a video signal of a main picture portion is transmitted in a letter box format and a reinforcement signal to reinforce a vertical resolution of the video signal of the main picture portion is transmitted by using scanning lines constructing non-picture portions, characterized by comprising: extracting means for extracting the reinforcement signal from the received broadcasting signal; n input unit for inputting the video signal of the main picture portion and the extracted reinforcement signal; vertical filtering processing means for smoothing a continuity in the vertical direction of the video signal; storage means for storing the video signal; and control means for controlling the storage means in a rule such that in a camera mode, the reinforcement signal is stored into the storage means together with the video signal and a scanning line interpolating process using the reinforcement signal is executed and, in a film mode, said inputted video signal is delayed by a predetermined period of time.

The above, and other, objects, features and advantage of the present invention will become readily apparent from the following detailed description thereof which is to be read in connection with the accompanying drawings.

### BRIEF DESCRIPTION OF THE DRAWINGS

Fig. 1 is a block diagram showing an example of a construction of an apparatus to which the invention can be applied;
Fig. 2 is a block diagram showing an example of a construction of a video signal processing apparatus according to the invention;
Figs. 3A to 3E are schematic diagrams showing a procedure of signal processes in the film mode;
Fig. 4 is a block diagram showing an example of a construction of the video signal processing apparatus according to the invention;
Fig. 5 is a block diagram showing an example of a construction of a format converting unit;
Fig. 6 is a schematic diagram schematically showing a general method for format conversion;
Figs. 7A and 7B are schematic diagrams showing an example of images received by the PALplus system;
Fig. 8 is a schematic diagram showing an example of a vertical resolution reinforcement signal and a signal of a letter box;
Figs. 9A to 9C are schematic diagrams showing schematically a scanning line interpolation by the PALplus system;
Fig. 10 is a schematic diagram showing the details of a frame construction by the PALplus system;
Figs. 11A and 11B are schematic diagrams showing a PALplus signal;
Fig. 12 is a block diagram showing an example of a construction of a video apparatus for demodulating the PALplus signal and allowing an image to be displayed on a display device by the VGA standard;
Fig. 13 is a block diagram showing an example of a construction of a luminance signal scanning line interpolation processing unit;
Figs. 14A to 14C are schematic diagrams schematically showing an interpolating process in an interpolation processing unit;
Figs. 15A to 15D are schematic diagrams showing a memory control in a field memory in the film mode.
Fig. 16 is a block diagram schematically showing an example of a construction of a color plus process and 3-dimensional Y/C separating unit;
Figs. 17A to 17E are time charts for a color plus signal process; and
Fig. 18 is a block diagram showing an example of a construction in which a 1-field delay FM is replaced to the color plus process and 3-dimensional Y/C separating unit.

### DETAILED DESCRIPTION OF THE PREFERRED EMBODIMENTS

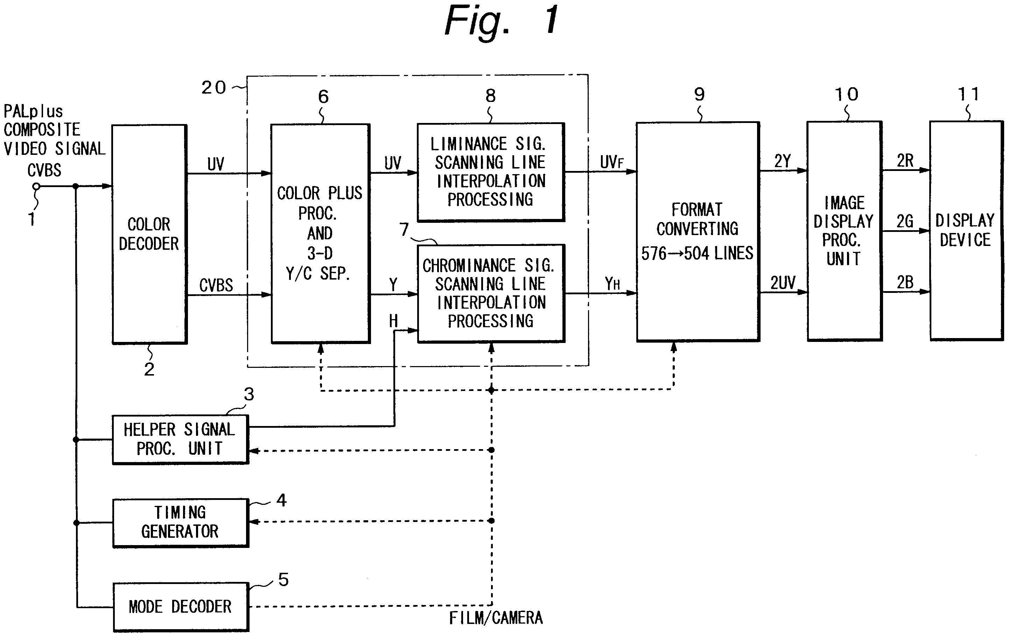

An embodiment of the invention will now be described hereinbelow with reference to the drawings. Fig. 1 shows an example of a construction of an apparatus to which the invention can be applied. A whole construction is almost the same as the construction of the video apparatus described in the above prior art. Namely, for example, the PALplus broadcasting radio wave received by an antenna is converted into the composite PALplus signal CVBS through a tuner and VIF (not shown) and is supplied from an input terminal 1. The signal CVBS is supplied to a color decoder processing unit 2, a helper signal processing unit 3, a timing generator 4, and a mode decoder 5.

A mode decoder 5 extracts the WSS multiplexed to the 23rd line of the PALplus signal. The timing generator 4 forms a timing signal on the basis of, for example, a horizontal sync signal of the PALplus signal. The WSS and the timing signal are supplied to each section necessary in the construction.

The vertical resolution reinforcement signals multiplexed to the upper and lower non-picture portions of the signal CVBS are demodulated by the helper signal processing unit 3, thereby obtaining the helper signal H. The helper signal H is supplied to a luminance signal scanning line interpolation processing unit 7, which will be explained hereinlater.

In the color decoder 2, a band in which a color carrier is included is extracted from the supplied signal CVBS by, for instance, a band pass filter. A color demodulation is performed to the extracted signal and the color difference signal UV including a cross color component is formed. The color difference signal UV actually comprises the color difference signal C_{R} and C_{B}. The color difference signal UV and signal CVBS are respectively A/D converted into digital signals. The digital signals are supplied to a color plus process and 3-dimensional Y/C separating unit 6.

In the color plus process and 3-dimensional Y/C separating unit 6, the luminance signal Y is extracted from the supplied signal CVBS and the cross color component is removed from the supplied color difference signal UV. The luminance signal Y is supplied to the luminance signal scanning line interpolation processing unit 7. The color difference signal UV is supplied to a chrominance signal scanning line interpolation processing unit 8. In the scanning line interpolation processing units 7 and 8, in the camera mode, a scanning line interpolating process is performed to the supplied signals by a method, so that the number of scanning lines is changed from 430 to 576. In the film mode, the scanning line interpolating process is not performed but a line flicker removing process is executed by a method, which will be explained hereinlater. The luminance signal Y and color difference signal UV which were subjected to the scanning line interpolating process or flicker removing process are set to the luminance signal Y_{H} and color difference signal UV_{H}, respectively, and are outputted.

Although the number of scanning lines is set to 430 in the PALplus standard, in the actual circuit, the number of scanning lines is set to 432 and the processes are executed as mentioned above on the basis of reasons such that an integer ratio can be easily obtained and the like. Although such a construction is realized by using two dummy lines, even if two dummy lines are added as mentioned above, they are ordinarily out of the display range of the television receiver and no problem occurs.

The color difference signal UV_{H} and luminance signal Y_{H} are supplied to a format converting unit 9. In the format converting unit 9, a format conversion to change the number of scanning lines is performed to the supplied color difference signal UV_{H} and luminance signal Y_{H}. In the format conversion, as described hereinafter, the triple port RAM is used, coefficients are multiplied to the even-number designated and odd-number designated lines which were read out in parallel, respectively, and the resultant lines are added, thereby obtaining a desired number of scanning lines. In this example, the number of scanning lines is converted from 576 to 504 in the camera mode and the number of scanning lines is converted from 430 to 504 in the film mode, so as to be adapted to the display device according to the VGA standard.

The color difference signal UV_{H} and luminance signal Y_{H} in which the number of scanning lines was changed are supplied to an image display processing unit 10, respectively. In this instance, the color difference signal UV_{H} and luminance signal Y_{H} are supplied to the image display processing unit 10 at a double reading speed. Such a process is based on a driving method of a display device 11, which will be explained hereinlater.

In the image display processing unit 10, the color difference signal UV_{H} and luminance signal Y_{H} are converted into a signal format suitable for display on the display device 11. In this case, they are converted into the signal comprising three primary colors of RGB. The RGB signals are respectively supplied to the display device 11 comprising, for example, an LCD and its driving unit and displayed.

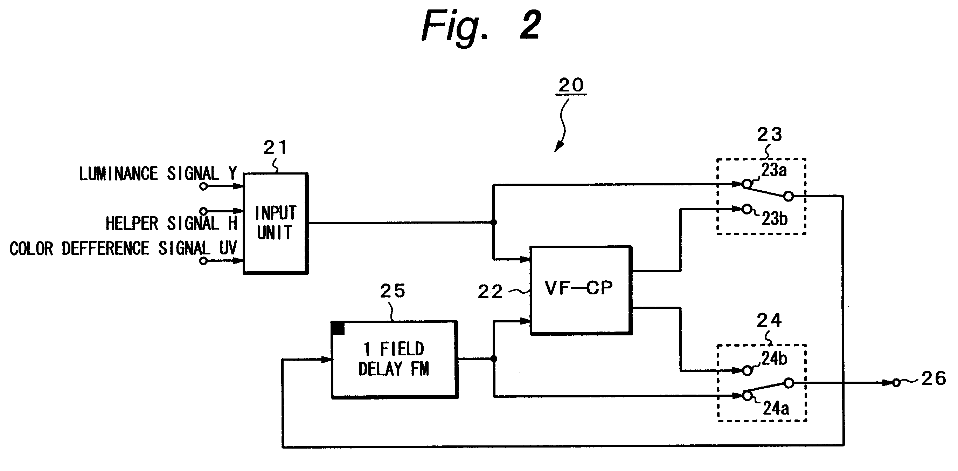

Fig. 2 conceptually shows a construction of a video signal processing apparatus 20 according to an embodiment of the invention. In the video signal processing apparatus 20, the foregoing color plus process and 3-dimensional Y/C separating unit 6, color difference signal scanning line interpolation processing unit 8, and luminance signal scanning line interpolation processing unit 7 are integratedly constructed, thereby realizing a saving and reduction of the field memories.

The video signal processing apparatus 20 comprises: an input unit 21 to which each signal is supplied; a vertical filter and color plus processing unit (hereinafter, abbreviated to a VF-CP unit) 22; switching circuits 23 and 24; and a 1-field delay field memory (hereinafter, abbreviated to a 1-field delay FM) 25 constructed by an RAM. The VF-CP unit 22 has two input terminals and two output terminals and can execute processes in parallel for signals of the respective different fields.

In Fig. 2, a luminance signal Y, a color difference signal UV, and a helper signal H are supplied from the color decoder 2 to the input unit 21. As will be explained hereinlater, since the video signal processing apparatus 20 has a construction including a Y/C separating function, actually, a PALplus composite signal CVBS is supplied to the input unit 21 instead of the luminance signal Y. In the input unit 21, the helper signal H is multiplexed to the non-picture portion of the supplied luminance signal Y, so that a new luminance signal Y + H is derived. The luminance signal Y + H and color difference signal UV are A/D converted and outputted, respectively.

Although only one system of an output signal path from the input unit 21 is shown in the diagram, actually, two systems of the luminance signal Y + H and color difference signal UV exist. Individual processes for the luminance signal Y + H and color difference signal UV will be explained hereinlater.

Since the subsequent processes are different in the camera mode and film mode, explanation will be made every mode. Those modes are discriminated on the basis of the WSS supplied from the mode decoder 5 to the video signal processing apparatus 20.

First, a case of the camera mode will be described. In case of the camera mode, a terminal 23a is fixedly selected in the switching circuit 23 and a terminal 24b is fixedly selected in the switching circuit 24. The luminance signal Y + H and color difference signal UV outputted from the input unit 21 are supplied to the 1-field delay FM 25 through the switching circuit 23, respectively.

In the 1-field delay FM 25, upon reading, the foregoing interleaving process is executed. Namely, in the luminance signal Y + H, the scanning lines of the main picture portion and the scanning lines including the helper signal H are rearranged and outputted at a ratio of 3 : 1 in a rule such that when the scanning lines of three lines of the main picture portion are outputted, the scanning line of one line including the helper signal is outputted. As for the color difference signal UV, since no vertical resolution reinforcement signal exists, by inserting a dummy signal to the line to which the helper signal H is inserted in the luminance signal Y, the interleaving process is performed. Since the dummy signal is regarded at a zero level in the subsequent vertical filtering process, any signal can be used.

The luminance signal Y + H and color difference signal UV which were interleave processed are supplied to the VF-CP unit 22 and are subjected to a vertical filtering process. In the embodiment, a motion adaptive color plus process in the camera mode is not performed. Thus, the scanning line interpolating process by the helper signal in the camera mode as a requirement of the PALplus signal process can be realized by only one field memory without using the field memory for the motion adaptive color plus process.

The luminance signal Y + H and color difference signal UV which were subjected to the vertical filtering process are outputted to an output terminal 26 through the switching circuit 24 in which the terminal 24b has been selected.

Next, the case of the film mode will be described. Figs. 3A to 3E show a procedure of the signal processes in the video signal processing apparatus 20 in the film mode. In the diagram, an axis of abscissa shows an elapse of time and an axis of ordinate indicates line numbers of the scanning lines. Reference numerals 1A, 1B, 2A, 2B, 3A, and 3B denote signals of A and B fields of the first, second, and third frames, respectively. The signal added with a prime (') shows that a predetermined process was carried out, which is explained hereinafter. A V blanking period is ignored in this diagram since it is not directly concerned with the essence of the invention.

In the film mode, the switching circuits 23 and 24 are switched every field in one frame. That is, in the switching circuits 23 and 24, terminals 23a and 24a are selected for the period of time of the A field as a first field in one frame, respectively. On the other hand, terminals 23b and 24b are selected for the period of time of the B field as a second field, respectively. The switching operations of the switching circuits 23 and 24 of every field are performed on the basis of a timing signal supplied from the timing generator 4.

As shown in Fig. 3A, the luminance signal Y + H and color difference signal UV of the A and B fields are supplied to the input unit 21 in accordance with the order of the A field and B field of the first frame, the A field and B field of the second frame, .... The luminance signal Y + H and color difference signal UV of the field unit are collectively called a field signal here.

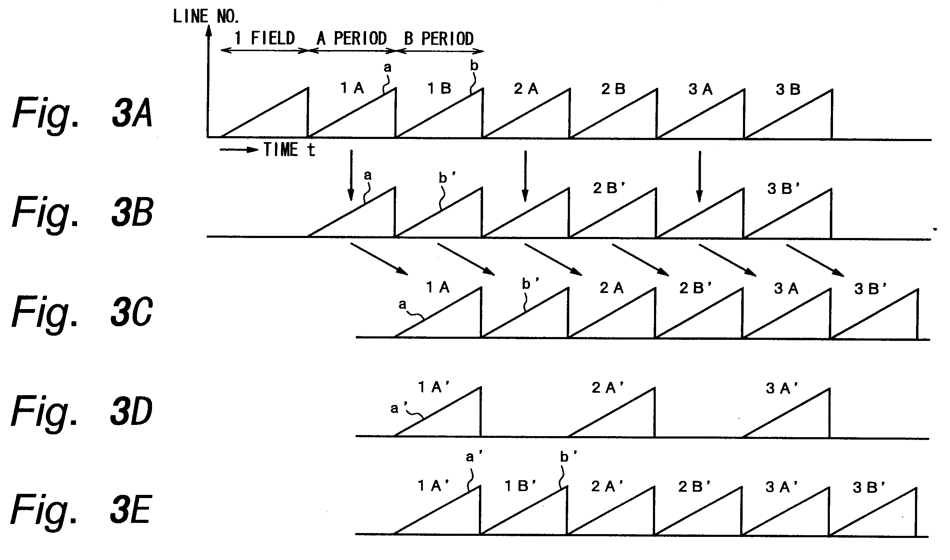

For the period of time of the A field, for instance, a field signal (a) outputted from the input unit 21 is supplied to one field delay FM 25 through the switching circuit 23 in which the terminal 23a was selected (Fig. 3B). The luminance signal Y + H and color difference signal UV of the A field are read out from one field delay FM 25 with a delay of one field as shown in Fig. 3C and are outputted.

In the embodiment, different from the case of the camera mode mentioned above, the scanning line interpolating process by the helper signal H for the luminance signal Y in the film mode is not performed. This is because even if the scanning line interpolating process is executed in the film mode, a large effect is not obtained at the time of the actual display and the scanning line interpolating process in the film mode is not a necessary condition of PALplus. However, the number of scanning lines of 430 lines per frame needs to be set to the number adapted to the display device 11. As mentioned above, the conversion of the number of scanning lines is executed in the format converting unit 9 arranged at the post stage of the video signal processing apparatus 20. The luminance signal Y + H and color difference signal UV which were read out from the 1-field delay FM 25 are supplied to one input terminal of the VF-CP unit 22.

For the period of time of the next B field, since the terminal 23b has been selected in the switching circuit 23, for example, the field signal (b) outputted from the input unit 21 is supplied to the other input terminal of the VF-CP unit 22. At this time, as mentioned above, the field signal (a) is delayed by a time of one field and is supplied to one input terminal of the VF-CP unit 22. Therefore, for the period of time of the B field, both of the field signals (a) and (b) of both of the A and B fields are supplied to the VF-CP unit 22. As mentioned above, since the color plus process is executed between both of the A and B fields of the same frame, the color plus process is carried out for the period of time of the B field by the VF-CP unit 22.

Further, in the VF-CP unit 22, a vertical filtering process is performed on a frame unit basis to the luminance signal Y + F and color difference signal UV in which the color plus process was executed. When the vertical filtering process is executed independently every field, the picture quality is deteriorated as shown in the foregoing problem. In this embodiment, the vertical filtering process is performed on a frame unit basis, namely, to both of the A and B fields. Thus, the line flicker that is peculiar to the film mode in the PALplus signal can be reduced.

The results obtained by performing the above process to the signals of the A field and B field are outputted as a field signal a' and a field signal b' from the VF-CP unit 22, respectively. The field signal a' is outputted as it is to an output terminal 26 through the switching circuit 24 in which the terminal 24b has been selected (Fig. 3D).

On the other hand, the field signal b' is supplied to 1-field delay FM 25 as shown in Fig. 3B through the switching circuit 23 in which the terminal 23b has been selected. As shown in Fig. 3C, the field signal b' is delayed by a time of one field and is outputted. In this instance, since the field has already progressed by one and the period of time of the A field comes, the terminal 24a has been selected in the switching circuit 24. Therefore, the processing result of the B field outputted from 1-field delay FM 25 is outputted to the output terminal 26 through the switching circuit 24. As mentioned above, the field signals a' and b' which were delayed by a time of one field for the signals supplied to the input unit 21 are supplied as output signals to the output terminal 27 (Fig. 3E).

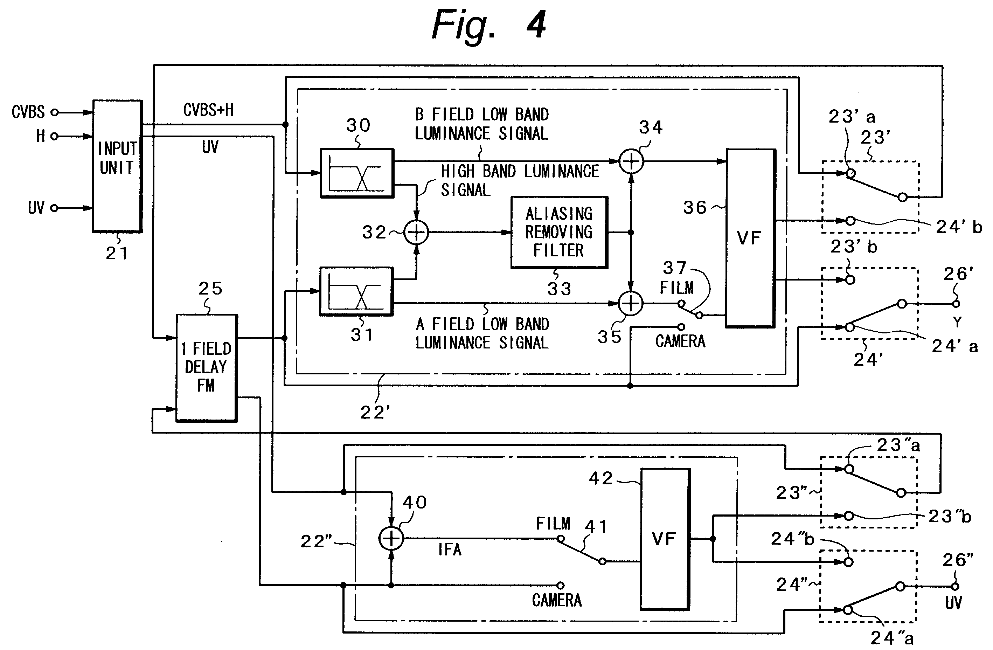

Fig. 4 shows further in detail an example of the construction of the video signal processing apparatus 20. In Fig. 4, portions corresponding to those in Fig. 2 mentioned above are designated by the same reference numerals and their detailed descriptions are omitted. The VF-CP unit 22 is constructed by a luminance signal processing unit 22' for performing processes of the luminance signal and a color difference signal processing unit 22'' for performing processes of the color difference signal.

First, processes in the film mode will be described. In the film mode, the signal CVBS, helper signal H, and color difference signal UV are supplied to the input unit 21. In the input unit 21, the helper signal H is multiplexed to the upper and lower non-picture portions of the signal CVBS, thereby obtaining a signal CVBS + H. The signal CVBS outputted from the input unit 21 is supplied to a band dividing filter 30 and is also supplied to a terminal 23'a of a switching circuit 23'. The color difference signal UV outputted from the input unit 21 is supplied to one input terminal of an adder 40 and a terminal 24''a of a switching circuit 24''.

For the period of time of the A field during which the signal of the A field is supplied to the signal processing apparatus 20, the terminals 23'a and 24'a are respectively selected in the switching circuits 23' and 24'. Therefore, in the A field, the signal CVBS + H supplied to the terminal 23'a is supplied to the 1-field delay FM 26 through a line multiplex processing unit 22' and the switching circuit 24'. The signal CVBS is delayed by a time of one field and is read out from the 1-field delay FM 25, namely, for a period of time of the B field during which the signal of the B field is supplied to the signal processing apparatus 20. The read-out signal CVBS + H of the A field is supplied to the band dividing filter 31.

For the period of time of the B field, terminals 23'b and 24'b are respectively selected in the switching circuits 23' and 24'. The signal CVBS + H of the B field is supplied to the band dividing filter 30 through the input unit 21.

Each of the band dividing filters 30 and 31 has, for example, a high-pass filter and a low-pass filter and divides the supplied signal CVBS + H into a low frequency region including no color carrier signal and a high frequency region including the color carrier signal. A boundary of the division in this instance is set to about 3 MHz.

In the signal CVBS + H of the B field which was band divided by the band dividing filter 30, the B field high band luminance signal on the high frequency side including the color carrier signal is supplied to one input terminal of an adder 32. On the other hand, the B field low band luminance signal on the low frequency side is supplied to one input terminal of an adder 34. Similarly, in the signal CVBS + H of the A field which was band divided by the band dividing filter 31 and was delayed by a time of one field, the A field high band luminance signal on the high frequency side including the color carrier signal is supplied to the other input terminal of the adder 32. On the other hand, the A field low band luminance signal on the low frequency side is supplied to one input terminal of an adder 35.

As mentioned above, for the period of time of the B field, the signals CVBS + H of the B field and A field are respectively supplied to the band dividing filters 30 and 31 and are set to the signals suitable for performing the processes in the film mode and the color plus process.

That is, for the period of time of the B field, the high band luminance signal of the A field and the high band luminance signal of the B field are added in the adder 32. As mentioned above, in the PALplus signal, since the phases of the color carrier signals of the A field and B field are different by 180°, the color carrier signals are set off by the addition and are removed. As mentioned above, the color plus process is executed and the Y/C separation is performed. The high band luminance signal Y from which the color carrier signal was removed is supplied to an aliasing removing filter 33 and an aliasing component is removed. The high band luminance signal Y in which the aliasing component was removed is supplied to both of the other input terminal of the adder 34 and the other input terminal of the adder 35.

In the adder 34, the high band luminance signal Y and the B field low band luminance signal are added and an addition output is directly supplied to a vertical filter 36. In the adder 35 as well, the high band luminance signal Y and the A field low band luminance signal are similarly added. An addition output is supplied to the vertical filter 36 through a switching circuit 37 in which the film side has fixedly been selected in the film mode. In the vertical filter 36, a vertical filtering process is performed to those supplied signals, thereby obtaining an A field output luminance signal and a B field output luminance signal.

The A field output luminance signal is supplied to an output terminal 26' through the switching circuit 24' in which the terminal 24'b has been selected for the period of time of the B field. On the other hand, the B field output luminance signal is supplied to the 1-field delay FM 25 through the switching circuit 23' in which the terminal 23'b has been selected. For the period of time of the next A field after the elapse of time of one field, the B field output luminance signal is read out from the 1-field delay FM 25. For the period of time of the A field, since the terminal 24'a has been selected in the switching circuit 24', the B field output luminance signal is outputted to the output terminal 26' through the switching circuit 25'.

As mentioned above, in the film mode, the A field output luminance signal and the B field output luminance signal are alternately derived to the output terminal 26', so that the luminance signal Y_{H} which was color plus processed is outputted.

As mentioned above, the A field color difference signal UV outputted from the input unit 21 is supplied to one input terminal of the adder 40, a terminal 23''a of a switching circuit 23'' In a manner similar to the foregoing switching circuits 23' and 24', in the switching circuit 23'' and a switching circuit 24'', the terminal 23''a and a terminal 24''a are selected for the period of time of the A field and terminals 23''b and 24''b are selected for the period of time of the B field, respectively. For the period of time of the A field, the A field color difference signal UV supplied to the terminal 23''a is supplied to the 1-field delay FM 25 through the switching circuit 23''.

For the period of time of the next B field, the A field color difference signal UV is read out from the 1-field delay FM 25. The read-out A field color difference signal UV is supplied to one input terminal of the adder 40. At the same time, the B field color difference signal UV is supplied from the input unit 21 to the other input terminal of the adder 40. The color difference signals UV of the A and B fields are added in the adder 40, so that an intraframe average color difference UV_{IFA} is outputted. In the film mode, the intraframe average color difference UV_{IFA} signal is immediately set to the 3-dimensional Y/C separation result. The intraframe average color difference signal UV_{IFA} is supplied to a vertical filter 42 through a switching circuit 41 in which the film side has fixedly been selected in the film mode.

The intraframe average color difference signal UV_{IFA} which was subjected to the vertical filtering process by the vertical filter 42 is supplied to both of the terminal 23''b of the switching circuit 23'' and the terminal 24''b of the switching circuit 24''. For the period of time of the B field, as mentioned above, the terminals 23''b and 24''b are selected in the switching circuits 23'' and 24''. Therefore, the A field color difference signal outputted from the switching circuit 24'' is supplied as it is to an output terminal 26''.

On the other hand, the B field color difference signal from the switching circuit 23'' is supplied to the 1-field delay FM 25. For the period of time of the next A field after the elapse of time of one field, the B field color difference signal is read out from the 1-field delay FM 25. For the period of time of the A field, since the terminal 24''a is selected in the switching circuit 24'', the B field color difference signal read out from the 1-field delay FM 25 is supplied to the output terminal 26'' through the switching circuit 24''.

As mentioned above, in a manner similar to the foregoing luminance signal, in the film mode, the A field color difference signal and the B field color difference signal are alternately outputted to the output terminal 26''.

The processes in the camera mode will now be described. In the camera mode, in the luminance signal processing unit 22' and color difference signal processing unit 22'', the camera side is fixedly selected in the switching circuits 37 and 41, respectively. The terminals 23'a and 23''a are fixedly selected in the switching circuits 23' and 23''. Further, the terminals 24'b and 24''b are fixedly selected in the switching circuits 24' and 24''.

For the period of time of the A field, the signal CVBS + H outputted from the input unit 21 is supplied to the 1-field delay FM 25 through the switching circuit 23' in which the terminal 23'a has been selected. The signal CVBS + H of the A field is delayed by a time of one field by the 1-field delay FM 26 and is read out from the 1-field delay FM 25 for the period of time of the next B field. Upon reading out, the interleaving process by the helper signal H is performed. The signal CVBS + H of the A field which was read out is supplied to the vertical filter 36 and is subjected to the vertical filtering process, thereby obtaining the luminance signal Y_{H} which was scanning line interpolated by the helper signal H. For the period of time of the B field, the luminance signal Y_{H} is outputted to the output terminal 26' through the switching circuit 24' in which the terminal 24'b has been selected.

Similarly, the color difference signal UV outputted from the input unit 21 is supplied to the 1-field delay FM 25 through the switching circuit 23'' in which the terminal 23''a has been selected. The color difference signal UV of the A field is read out from the 1-field delay FM 25 for the period of time of the next B field. In this instance, a dummy signal is inserted to the position corresponding to the line in which the helper signal H was inserted in the signal CVBS mentioned above. The color difference signal UV is subjected to the vertical filtering process through the vertical filter 42 and is outputted to the output terminal 26'' through the switching circuit 24''.

In the camera mode, as mentioned above, the signals are delayed by a time of one field for the signals supplied to the input unit 21 and the signals of the A and B fields are alternately outputted to the output terminals 27' and 27''.

As mentioned above, in the case where the image by the PALplus system in which the number of effective scanning lines is equal to 576 is displayed onto the screen in which the number of scanning lines is different from the above number, for example, the number of scanning lines is equal to 480 by the VGA standard, a format conversion to reduce the number of scanning lines is necessary. Fig. 5 shows an example of a construction of the format converting unit 9 for performing a format conversion. In the format converting unit 9, the number of scanning lines is first changed to a desired number by using a field memory and, after that, a filtering in the vertical direction is carried out.

Although the format converting unit 9 has a converting unit for the luminance signal Y and a converting unit for the color difference signal UV, since the processes in those converting units are substantially the same, only the conversion for the luminance signal Y will now be described.

The luminance signal Y_{H} outputted from output terminal 26' is supplied to a triple port field memory (hereinafter, abbreviated to a triple port FM) 90. The triple port FM 90 has three ports. For example, supplied data is written to one port and different data can be read out in parallel from two ports 90a and 90b, respectively. A luminance signal Y₁ read out from the port 90a is supplied to a multiplier 92 and is multiplied with a predetermined coefficient and is supplied to one input terminal of an adder 94. Similarly, a luminance signal Y₂ read out from the port 90b is supplied to the other input terminal of the adder 94 through a multiplier 93. In the adder 94, the supplied luminance signals Y₁ and Y₂ are added, thereby obtaining a format converted luminance signal Y and outputting.

Fig. 6 schematically shows a general method of the format conversion. It is now assumed that scanning lines L₁, L₂, ..., and L₈ by the luminance signals Y_{H} of eight lines have been sequentially written in the triple port FM 90. The written scanning lines are read out in parallel from the ports 90a and 90b, respectively. In this instance, as shown in the diagram, for example, odd-number designated scanning lines L₁, L₃, L₅, L₇, and L₉ are read out from the port 90a. Among them, the scanning lines L₃, L₅, and L₇ are overlappingly read out. On the other hand, the even-number designated scanning lines are overlappingly read out from the port 90b, respectively.

In the multipliers 92 and 93, coefficients are multiplied to the scanning lines which were read out, respectively. In the example, in the multiplier 92, 1, 1/7, 5/7, 3/7, 3/7, 5/7, 1/7, and 0 are sequentially multiplied to the input scanning lines of eight lines, respectively. In the multiplier 93, 0, 6/7, 2/7, 4/7, 4/7, 2/7, 6/7, and 0 are similarly multiplied, respectively. By respectively adding the scanning lines obtained as results of those multiplications, the scanning lines of seven lines can be obtained from the scanning lines of eight lines. Thus, the total number of scanning lines per frame is set to 576 x 7/8 = 504. When considering an overscan portion, it is the number of scanning lines suitable to be displayed on the display device in which the number of scanning lines is equal to 480.

Although explanation has been made above on the assumption that the video signal processing apparatus according to the invention is applied to the PALplus signal, the invention is not limited to such an example. For instance, if the foregoing color decoder 2, color plus process and 3-dimensional Y/C separating unit 6 are constructed so as to correspond to the SECAM system, a similar function can be also realized even in the SECAM system. By a similar method, they can be also made correspond to the EDTV-II system.

Although the invention has been described above on the assumption that the 3-4 conversion in the UV signal is performed by the insertion of the dummy signal, the invention is not limited to such a method. For example, such a conversion can be also performed by properly setting coefficients or the like in the format converting unit 9 which is arranged at the post stage,

As described above, according to the invention, since the control of the signal path by two switching circuits and the rational memory management are carried out, there is an effect such that the number of field memories which are required for the PALplus signal can be reduced.

According to the invention, since a simple signal process in which the motion adaptive color plus process is not performed is executed in the camera mode, there is an effect such that the field memories which are necessary at the time of the motion detection can be saved.

Further, according to the invention, the vertical filtering process is performed for both of the A and B fields on a frame unit basis in the film mode. There is, consequently, an effect such that the occurrence of the line flickering can be reduced.

Having described a specific preferred embodiment of the present invention with reference to the accompanying drawings, it is to be understood that the invention is not limited to that precise embodiment, and that various changes and modifications may be effected therein by one skilled in the art without departing from the scope or the spirit of the invention as defined in the appended claims.

## Claims

1. A video signal processing apparatus for receiving a broadcasting signal in which a video signal of a main picture portion is transmitted in a letter box format and a reinforcement signal to reinforce a vertical resolution of the video signal of the main picture portion is transmitted by using scanning lines constructing non-picture portions, characterized by comprising:
extracting means for extracting said reinforcement signal from the received broadcasting signal;
an input unit for inputting the video signal of said main picture portion and said extracted reinforcement signal;
vertical filtering processing means for smoothing a continuity in the vertical direction of the video signal;
storage means for storing the video signal; and
control means for controlling said storage means in a rule such that in a camera mode, said reinforcement signal is stored into said storage means together with said video signal and a scanning line interpolating process using said reinforcement signal is executed and, in a film mode, said inputted video signal is delayed by a predetermined period of time.

2. A video signal processing apparatus according to claim 1, characterized in that
said storage means outputs the reinforcement signal of one scanning line of the non-picture portions subsequent to the video signal of a plurality of scanning lines of said main picture portion in said camera mode.

3. A video signal processing apparatus according to claim 2, characterized in that
said storage means is constructed by a memory which can be accessed at random.

4. A video signal processing apparatus according to claim 3, characterized in that
said storage means delays the inputted signal for one field period of time in said film mode.

5. A video signal processing apparatus according to claim 4, characterized in that
said apparatus further has color plus processing means for performing a color plus process by using the video signal outputted from said storage means and the video signal outputted from said input unit in said film mode, and
an output of said color plus processing means is supplied to said vertical filtering processing means.

6. A video signal processing apparatus according to claim 5, characterized by further having:
first switching means for inputting the video signals which are outputted from said input unit and said vertical filtering processing means, selecting one of said video signals, and supplying to said storage means; and second switching means for inputting the video signals which are outputted from said vertical filtering processing means and said storage means, selecting one of said video signals, and outputting.

7. A video signal processing apparatus according to claim 6, characterized by further having:
format conversion processing means for performing a converting process so that the signal outputted from said vertical filtering processing means is adapted to a VGA display format; and
display means for displaying the video signal outputted from said format conversion processing means.
